# EUROPEAN PATENT APPLICATION

(11) **EP 4 606 588 A1**
(43) Date of publication of application: **27.08.2025**
(21) Application number: 24158839.1
(22) Date of filing: 21.02.2024
(51) Int. Cl.: B41J 2/21, B41J 11/00, G06K 15/02

(54) **A METHOD FOR CONTROLLING AN IMAGE QUALITY OF PRINTED SUBSTRATES BY AN IN-LINE SCANNER**

(71) Applicant: CANON KABUSHIKI KAISHA, Tokyo 146-8501 (JP)
(72) Inventor: VONS, Johan G., Venlo (NL)
(74) Representative: Canon Production Printing IP Department

(57) **Abstract**

A control system of a printer receives an instruction to print a print job for a media calibration of a substrate. A printhead provides marking material to the substrate, when a transport system of the printer moves the substrate along the printhead in the forward direction A. The control system instructs the motor system of the printer to revert the moving direction of the transport system from the forward direction A to a backward direction B opposite to the forward direction A. An in-line scanner scans the printed substrate in order to create at least one scanned image for image quality control, when the printed substrate passes the in-line scanner in the backward direction B.

## Description

### BACKGROUND OF THE INVENTION

### Field of the invention

The present invention relates to a method for controlling an image quality of printed substrates by a printer, the printer comprising an entry station for receiving a substrate to be printed, an end station for storing the substrate when printed, at least one print head for providing marking material to the substrate, an in-line scanner for detecting failing nozzles and positioned close to the at least one print head, a transport system for transporting the substrate in a forward direction from the entry station along the at least one print head and the in-line scanner towards the end station, a motor system for driving the transport system, and a print controller for receiving print jobs, for controlling the printing process and for receiving image data from the in-line scanner, wherein the method comprises the steps of
a) the control system receiving an instruction to print a print job for a media calibration of the substrate, the print job comprising print job data and print job settings, and
b) the control system receiving an indication that the substrate, is intended to be scanned by the in-line scanner for image quality control after printed upon according to the print job.

The control system may also be referred to as controller or as control unit hereinafter. The printer may also be referred to as a printing system or a print device. The printer may be a roll-fed printer or a sheet-fed printer.

The at least one print head may also be referred to as a print unit.

The transport system may be provided with a belt with vacuum suction or a plurality of rollers in order to guide the substrate along a media transport path from the entry station to the end station with zero, one or more handovers between the modules placed between the entry station and the end station. The transport system allows a forward transport of the substrate.

In measurement technology media calibration is the comparison of measurement values delivered by a device under test for a kind of media with those of a calibration standard of known accuracy. Such a standard could be another measurement device of known accuracy, a device generating the quantity to be measured such as a colour and an optical density of the media. A test card comprising a test pattern is used for the calibration of printers. Printer test patterns are physical sheets that are printed, with the difference in the resulting print revealing any telltale deviations or defects in the printer's ability to print.

### Description of Background Art

A printed image quality test print has to be scanned for image quality artefacts and printhead calibration purposes. The scanning is done by using the in-line scanner, with the in-line scanner being located immediately after the at least one printhead.

During the onboarding of a new media, the in-line scanner is used to determine the amount of marking material like primer and ink, by looking for artefacts like bleed and mottle. However for image quality purposes said determination must be done on the printed substrate as it comes out of the printer. When a new print head is mounted, the in-line scanner is used to tune the print head uniformity in general and the print head uniformity for a given media in particular.

In cut-sheet printers, this problem is solved with the help of a duplex-loop, which transports the printed sheet back to the start of the media transport path. Some printers have the in-line scanner (a camera) at the end of the media transport path scanning the print, but that way of working results in a longer reaction time for nozzle failure detection - also established by the in-line scanner - and thus more waste, and adding a second camera system at the end of the media transport path results in additional cost of the camera system for an infrequent activity.

Another solution is that the operator of the printer carries the printed substrate back to the entry station. Drawbacks are that said solution is not a fully automated process, the walking distance from the end station back to the entry station may be significant, for example more than 10 m. and takes time, and a size of the substrate may be difficult to carry, especially for smaller operators. Moreover, the operator could make the mistake of feeding the printed substrate the wrong way (rotated, upside down).

Another solution is to add the equivalent of a duplex loop. Drawbacks are cost and complexity. There may be no physical space available for said equivalent as space below the transport system may be used for maintenance access and substrates like corrugated boards cannot be bent.

Altogether, the above-mentioned solutions all have drawbacks and are not readily easily implemented.

### SUMMARY OF THE INVENTION

It is the objective of the present invention to minimize the time needed for the scanning of the image quality print by the in-line scanner and to prevent operator mistakes during a run-in of new media.

In accordance with the present invention, the method comprises the further steps of
c) the at least one printhead providing the marking material to the substrate, when the transport system moves the substrate along the at least one printhead in the forward direction,
d) the control system instructing the motor system to revert the moving direction of the transport system from the forward direction to a backward direction opposite to the forward direction,
e) the in-line scanner scanning the printed substrate in order to create at least one scanned image, when the printed substrate passes the in-line scanner in the backward direction,
fj the in-line scanner sending at least one scanned image to the control system,
g) the control system analyzing the at least one scanned image for image quality control,
h) after a completion of the scanning by the in-line scanner, the control system instructing the motor system to revert the moving direction of the transport system from the backward direction to the forward direction, and
i) the transport system delivering the printed and scanned substrate at the end station.

The method according to the present invention is a fully automated process. The method is to transport the printed substrate back to the in-line scanner by running the media transport in reverse. The proposed method is in particular very suitable for a completely straight or flat media transport, when using transport systems with a vacuum suction and with media being stiff, for example corrugated boards. The same media transport path is used in the forward direction as well as in the backward direction. No second deviating media transport path is implemented and followed after reversing the transport direction. The transport system according to the present invention allows a forward transport of the substrate as well as a backward transport of the substrate.

The at least one printhead provides the marking material to the substrate. The marking material may be directly ejected towards the substrate or the printhead may first jet an image on an intermediate belt, after which the image is transferred to the substrate.

The present invention also relates to a method for controlling an image quality of printed substrates by a printer, the printer comprising an entry station for receiving a substrate to be printed, an end station for storing the substrate when printed, at least one print head for providing marking material to the substrate, an in-line scanner for detecting failing nozzles and positioned close to the at least one print head, a transport system for transporting the substrate in a forward direction from the entry station along the at least one print head and the in-line scanner towards the end station, a motor system for driving the transport system, and a print controller for receiving print jobs, for controlling the printing process and for receiving image data from the in-line scanner, wherein the method comprises the steps of a) the control system receiving an instruction to print a print job for a media calibration of the substrate, the print job comprising print job data and print job settings, b) the control system receiving an indication that the substrate is intended to be scanned by the in-line scanner for image quality control after printed upon according to the print job, c) the at least one printhead providing the marking material to the substrate, when the transport system moves the substrate along the at least one printhead in the forward direction, d) the control system instructing the motor system to revert the moving direction of the transport system from the forward direction to a backward direction opposite to the forward direction, e) the printed substrate passing the in-line scanner in the backward direction without being scanned by the in-line scanner, fj the control system instructing the motor system to revert the moving direction of the transport system from the backward direction to the forward direction after the printed substrate has completely passed the in-line scanner in the backward direction, g) the in-line scanner scanning the printed substrate in order to create at least one scanned image, when the printed substrate passes the in-line scanner again in the forward direction, h) the in-line scanner sending the at least one scanned image to the control system, i) the control system analyzing the at least one scanned image for image quality control, and j) the transport system delivering the printed and scanned substrate at the end station.

By doing so, the printed substrate is scanned in a same direction as it is printed, making image processing less complicated.

According to an embodiment the printer comprises in-between the at least one print head and the end station, a first drying station for drying the printed substrate, and the method comprises a step of drying the printed substrate when the printed substrate passes the first drying station in the forward direction, and step d) is executed after drying the printed substrate. The purpose of the drying station is to get humidity out of the substrate and control the temperature of the substrate leaving the drying station.

According to an embodiment the printer comprises after the first drying station, a coater for coating the printed substrate and a second drying station for drying the coated substrate, and the method comprises the steps of coating the printed substrate when the printed substrate passes the coating station in the forward direction, and drying the coated substrate when the coated substrate passes the second drying station in the forward direction, and step d) is executed after drying the coated substrate. The verb coating refers to the application of a coating layer after printing and does not refer to coated paper. Coating may be an integral part of a packaging print process, but the present invention is also valid for printers without a coating unit. Drying after coating is preferable because coated substrates may be stapled after coating and may not stick together. Drying after coating is also preferable to make sure that stapling of coated substrates does not result in media dust from the substrate or damage to a coating layer by contact with the substrate and imprinting the fiber structure or fluting structure of the substrate.

According to an embodiment the step b) of receiving the indication comprises the sub-step of receiving the indication by means of a user interface of the printer.

According to an embodiment the step b) of receiving the indication comprises the sub-step of extracting the indication from the print job settings.

According to an embodiment the print job is predefined in memory of the control system. The print job may be for example stored on a hard disk system of the control system.

According to an embodiment the print job is received by means of the user interface of the printer.

The present invention also relates to a method for controlling an image quality of printed substrates by a printer, the printer comprising an entry station for receiving a substrate to be printed, an end station for storing the substrate when printed, at least one print head for providing marking material to the substrate, an in-line scanner for detecting failing nozzles and positioned close to the at least one print head, a transport system for transporting the substrate in a forward direction from the entry station along the at least one print head and the in-line scanner towards the end station, a motor system for driving the transport system, and a print controller for receiving print jobs, for controlling the printing process and for receiving image data from the in-line scanner, wherein the method comprises the steps of a) the control system receiving an instruction to print a print job for a media calibration of the substrate, the print job comprising print job data and print job settings, b) the control system receiving an indication that the substrate, after printed upon according to the print job, is intended to be scanned by the in-line scanner for image quality control, c) the at least one printhead providing the marking material to the substrate, when the transport system moves the substrate along the at least one printhead in the forward direction, d) the control system instructing the motor system to revert the moving direction of the transport system from the forward direction to a backward direction opposite to the forward direction, e) the in-line scanner scanning the printed substrate in order to create at least one scanned image, when the printed substrate passes the in-line scanner in the backward direction, fj the in-line scanner sending at least one scanned image to the control system, g) the control system analyzing the at least one scanned image for image quality control, and h) the transport system delivering the printed and scanned substrate at the entry station.

The present invention further relates to a printer comprising an entry station for receiving a substrate to be printed, an end station for storing the substrate when printed, at least one print head for providing marking material to the substrate, an in-line scanner for detecting failing nozzles and positioned close to the at least one print head, a transport system for transporting the substrate in a forward direction from the entry station along the at least one print head and the in-line-scanner towards the end station, a motor system for driving the transport system, a control system for receiving print jobs, for controlling the printing process and for receiving image data from the in-line scanner, wherein the motor system is a bidirectional motor system and the printer is configured to perform the steps of a method according to the present invention.

According to an embodiment the printer comprises in-between the at least one print head and the end station, a first drying station for drying the printed substrate, and the printer is configured to perform the steps of a method according to the present invention. The drying station may comprise heating, cooling, addition of steam, etc. A goal is to dry the marking material sufficiently fast, with good image quality, good adherence, and sufficiently dry in order not to be damaged by a next step in the process. The needed drying capacity may be determined by the amount of marking material on the substrate, the transport velocity, etc.

According to an embodiment the printer comprises after the first drying station, a coater for coating the printed substrate and a second drying station, and the printer is configured to perform the steps of a method according to the present invention.

According to an embodiment the printer comprises after the first drying station, an in-line finishing device for embellishment of the printed or coated substrate. The embellishment may be embossing, foiling, additional spot-coating, etc.

According to an embodiment the printer comprises a user interface for receiving the indication and the printer is configured to perform the steps of a method according to the present invention.

The present invention also relates to a software product comprising program code on a machine-readable medium, which program code, when loaded into a control system of a printer, causes the printer to execute the steps of a method according to the present invention.

Further scope of applicability of the present invention will become apparent from the detailed description given hereinafter. However, it should be understood that the detailed description and specific examples, while indicating preferred embodiments of the present invention, are given by way of illustration only, since various changes and modifications within the spirit and scope of the present invention will become apparent to those skilled in the art from this detailed description.

### BRIEF DESCRIPTION OF THE DRAWINGS

The present invention will become more fully understood from the detailed description given herein below and the accompanying drawings which are given by way of illustration only, and thus are not limitative of the present invention, and wherein:
Fig. 1 are schematic drawings of printers according to embodiments of the present invention;
Figs. 2 - 3 are schematic drawings of media transport paths of printers according to embodiments of the present invention;
Fig. 4 is a schematic block diagram illustrating the control system of the printer according to the present invention;
Fig. 5 is a schematic block diagram illustrating the steps of a first method according to the present invention;
Fig. 6 is a schematic block diagram illustrating the steps of a second method according to the present invention;
Fig. 7 is a schematic block diagram illustrating the steps of a third method according to the present invention; and
Fig. 8 is a diagram of a software product according to the present invention.

### DETAILED DESCRIPTION OF THE PREFERRED EMBODIMENTS

The present invention will now be described with reference to the accompanying drawings, wherein the same reference numerals have been used to identify the same or similar elements throughout the several views.

### Printing system

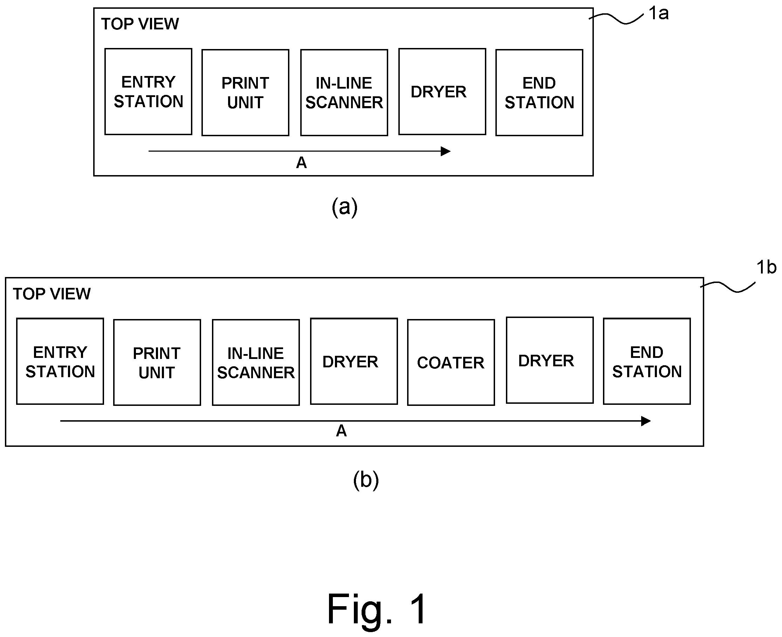

Fig. 1(a) is a schematic top view of a printer 1a configured to print on a substrate according to an embodiment of the present invention. The printer 1a comprises an entry station for receiving the substrate to be printed, a print unit comprising the at least one printhead for providing the marking material to the substrate, when the transport system moves the substrate along the at least one printhead in the media forward direction A, an in-line scanner for scanning the printed substrate in order to create at least one scanned image, a first drying system for drying the printed substrate and an end station for delivering the dried and printed substrate. The in-line scanner may be a digital camera used to digitally capture and store images via an electronic image sensor based on CCD or CMOS sensor technology. Algorithm and AI may be used to enhance image quality. The digital cameras provides an optical system, typically using a lens with a variable diaphragm to focus light onto an electronic image pickup device. The diaphragm and shutter admit a controlled amount of light to the image. The digital camera can store and delete images from on CCD or CMOS sensor technology.

Usually the in-line scanner is used to check immediately after printing if there are failing nozzles of the printhead. According to the present invention the in-line scanner is used for image quality control of printed (and dried) images on the substrate.

The print job which is used for image quality control may comprise a dedicated test pattern to check and control the image quality. Image quality is referred to as the weighted combination of all of the visually significant attributes of an image. The test pattern may also be used for the calibration of the printer. Printer test patterns are physical sheets that are printed, with the difference in the resulting print, revealing any telltale deviations or defects in the machine's ability to print.

The image quality control process comprises at least one objective method which is based on computational models that can predict perceptual image quality
The objective method may be based on direct measurements on the test pattern, system modeling or a digital assessment against calibrated standards.

Usually the quality of the scanned test pattern is assessed by comparing the scanned test pattern with a reference image that is assumed to have perfect quality by means of image quality attributes. Image quality attributes are for example sharpness, noise, dynamic range, tone reproduction, contrast, colour accuracy, distortion, colour moiré and significant visual artifacts. Fig. 1(b) is a schematic top view of a printer 1b configured to print on a substrate according to another embodiment of the present invention which uses the same in-line scanner as described in the previous embodiment in Fig. 1(a). The printer 1b - additionally to the printer 1a in Fig. 1(a) - comprises a coater in-between the first drying station and a second drying station for drying the printed and coated substrate.

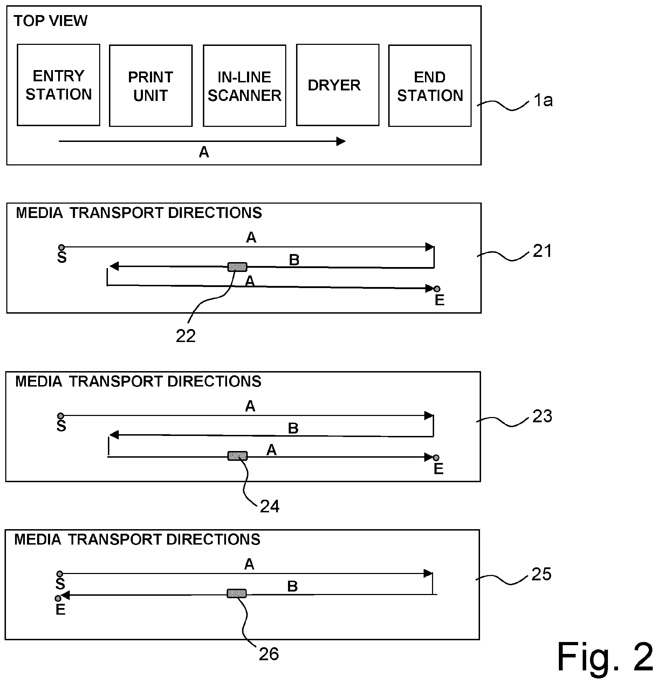

Fig. 2 shows printer 1a of Fig. 1(a) and corresponding media transport paths 21, 23, 25 according to embodiments of the present invention. Each of the media transport paths 21, 23, 25 correspond to a different embodiment of the method according to the present invention.

A first media transport path 21 has a starting point S at the entry station of printer 1a and leads in a forward direction A along the print unit which prints on the substrate, the in-line scanner which scans for example for failing nozzles of the at least one print head of the print unit and the first dryer which dries the printed substrate towards the end station. At the end station or just after completion of drying the printed substrate, the control system of the printer 1a instructs the motor system of the printer 1a to revert the media transport direction A to an opposite backward media transport direction B. The dried and printed substrate now goes along the first dryer again to the in-line scanner which scans the dried and printed substrate at a position 22 on the media transport path 21. The scanned, dried and printed substrate moves towards the entry station in the backward direction B until the whole substrate is scanned by the in-line scanner. When the scanning has been completed, the control system of the printer 1a instructs the motor system of the printer 1a to revert the backward media transport direction B again in the forward direction A in order to eventually deliver the scanned, dried and printed substrate in the end station of printer 1a, which is the end point E of the first media transport path 21.

According to the first media transport path 21 is the duration between the moment in time 22 of the scanning of the printed substrate and the delivery of the printed and scanned substrate in the end station is rather long. This is advantages, since during said long time period the scanned images can be sent to the print controller and can be analyzed for image quality control before or not too long after the substrate finally reaches the end station.

A second media transport path 23 has a starting point S at the entry station of printer 1a and leads in a forward direction A along the print unit which prints on the substrate, the in-line scanner which scans for example for failing nozzles of the at least one print head of the print unit and the first dryer which dries the printed substrate towards the end station. At the end station or just after completion of drying the printed substrate, the control system of the printer 1a instructs the motor system of the printer 1a to revert the media transport direction A to an opposite backward media transport direction B. The dried and printed substrate now goes along the first dryer and the in-line scanner which does not yet scan the dried and printed substrate towards the entry station of printer 1a. The control system of the printer 1a instructs the motor system of the printer 1a to revert the backward media transport direction B into an opposite forward media transport direction A. The substrate passes the print unit again which does not print on the substrate in this pass, and along the in-line scanner which at a position 24 on the media transport path 23 scans the printed and dried substrate. The scanned, dried and printed substrate moves along the first dryer in the forward direction A towards the end station in an end point E of the second media transport path 23.

According to the second media transport path 23 the scanning of the printed substrate takes place in the same direction A is a regular scanning by the in-line scanner for failing nozzles. This is advantageous, since all or at least a large part of the image processing software for detection of failing nozzles may also be used for the image quality control. This is in contrast with the first media transport path 21, wherein the scanning takes place in the opposite direction B which leads to an additional mirroring step in the image processing software.

A third media transport path 25 has a starting point S at the entry station of printer 1a and leads in a forward direction A along the print unit which prints on the substrate, the in-line scanner which scans for example for failing nozzles of the at least one print head of the print unit and the first dryer which dries the printed substrate towards the end station. At the end station or just after completion of drying the printed substrate, the control system of the printer 1a instructs the motor system of the printer 1a to revert the media transport direction A to an opposite backward media transport direction B. The dried and printed substrate now goes along the first dryer again to the in-line scanner which scans the dried and printed substrate at a position 26 on the media transport path 25. The scanned, dried and printed substrate moves towards the entry station in the backward direction B which is the end point E of the third media transport path 25.

The third media transport path 25 is advantageous with respect to the length of the third media transport path 25 in total for the method of the present invention. The length of the third media transport path 25 is much shorter than the length of the first media transport path 21 and the second media transport path 23 which leads to a gain in operator time.

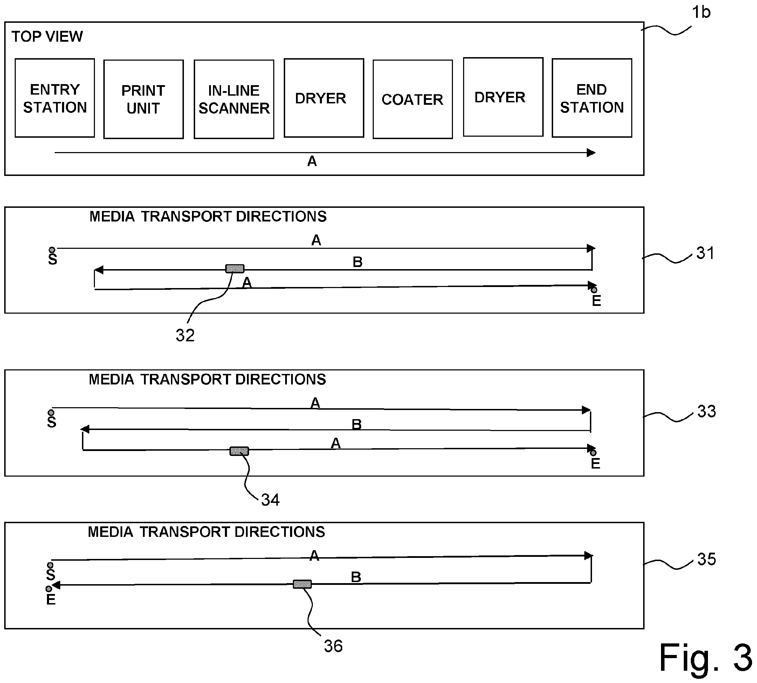

Fig. 3 shows printer 1b of Fig. 1(b) and corresponding media transport paths 31, 33, 35 according to embodiments of the present invention.

A first media transport path 31 has a starting point S at the entry station of printer 1b and leads in a forward direction A along the print unit which prints on the substrate, the in-line scanner which scans for example for failing nozzles of the at least one print head of the print unit, the first dryer which dries the printed substrate, the coater which coats the dried and printed substrate, the second dryer which dries the coated substrate towards the end station. At the end station or just after completion of drying the coated substrate by the second dryer, the control system of the printer 1b instructs the motor system of the printer 1b to revert the media transport direction A to an opposite backward media transport direction B. The coated substrate now goes along the second dryer, the coater and the first dryer again to the in-line scanner which scans the coated substrate at a position 32 on the media transport path 31. The scanned and coated substrate moves towards the entry station in the backward direction B until the whole substrate is scanned by the in-line scanner. When the scanning has been completed, the control system of the printer 1b instructs the motor system of the printer 1b to revert the backward media transport direction B again in the forward direction A in order to eventually deliver the scanned, dried and coated substrate in the end station of printer 1b, which is the end point E of the first media transport path 31.

A second media transport path 33 has a starting point S at the entry station of printer 1b and leads in a forward direction A along the print unit which prints on the substrate, the in-line scanner which scans for example for failing nozzles of the at least one print head of the print unit, the first dryer which dries the printed substrate, the coater which coats the dried and printed substrate, the second dryer which dries the coated substrate towards the end station. At the end station or just after completion of drying the coated substrate by the second dryer, the control system of the printer 1b instructs the motor system of the printer 1b to revert the media transport direction A to an opposite backward media transport direction B. The dried and coated substrate now goes along the second dryer, the coater, the first dryer and the in-line scanner which does not yet scan the dried and coated substrate towards the entry station of printer 1b. The control system of the printer 1b instructs the motor system of the printer 1b to revert the backward media transport direction B into an opposite forward media transport direction A. The substrate passes the print unit again which does not print on the substrate in this pass, and along the in-line scanner which at a position 34 on the media transport path 33 scans the dried and coated substrate. The scanned, dried and coated substrate moves along the first dryer, the coater and the second dryer in the forward direction A towards the end station in an end point E of the second media transport path 33.

A third media transport path 35 has a starting point S at the entry station of printer 1b and leads in a forward direction A along the print unit which prints on the substrate, the in-line scanner which scans for example for failing nozzles of the at least one print head of the print unit, the first dryer which dries the printed substrate, the coater which coats the dried and printed substrate and the second drying which dries the coated substrate towards the end station. At the end station or just after completion of drying the coated substrate by the second dryer, the control system of the printer 1b instructs the motor system of the printer 1b to revert the media transport direction A to an opposite backward media transport direction B. The dried and coated substrate now goes along the second drier, the coater and the first dryer again to the in-line scanner which scans the dried and coated substrate at a position 36 on the media transport path 35. The scanned, dried and coated substrate moves towards the entry station in the backward direction B which is the end point E of the third media transport path 35.

### Control

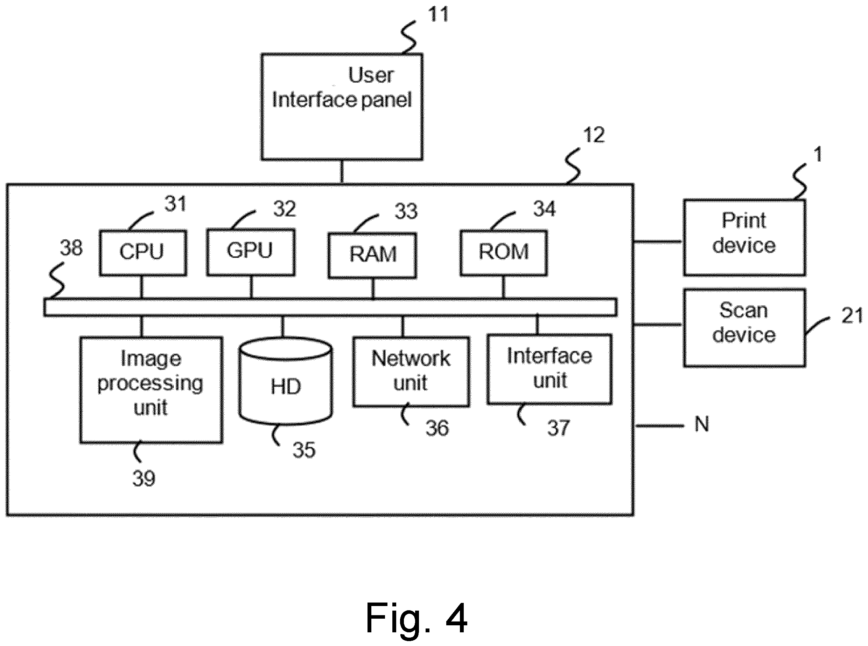

An embodiment of the control unit 12 of the printers 1a, 1b shown in Fig. 1 is in more detail presented in Fig. 4. As shown in Fig. 4, the control unit 12 comprises a Central Processing Unit (CPU) 31, a Graphical Processor Unit (GPU) 32, a Random Access Memory (RAM) 33, a Read Only Memory (ROM) 34, a network unit 36, an interface unit 37, a hard disk (HD) 35 and an image processing unit 39 such as a Raster Image Processor (RIP). The aforementioned units 31 - 37 are interconnected through a bus system 38. However, the control unit 12 may also be a distributed control unit.

The CPU 31 controls the printing system 1 in accordance with control programs stored in the ROM 34 or on the HD 35 and the local user interface panel 11. The local user interface panel 11 may be connected to the control unit 12 via HDMI for example, or may be an independent personal computer connected to the control unit 12 via a network connection. The print device 1 shown in Fig. 4 is equal or equivalent to an embodiment of the printer 1a or the printer 1b of Fig. 1. The CPU 31 for example controls the motor system (not shown) which drives a transport system of the printing system 1. The CPU 31 also controls the image processing unit 39 and the GPU 32. The ROM 34 stores programs and data such as boot program, set-up program, various set-up data or the like, which are to be read out and executed by the CPU 31. The hard disk 35 is an example of a non-volatile storage unit for storing and saving programs and data which make the CPU 31 execute a print process to be described later. Also image quality control print jobs and the corresponding data may be stored in the hard disk 35. The hard disk 35 also comprises an area for saving the data of externally submitted print jobs. The programs and data on the HD 35 are read out onto the RAM 33 by the CPU 31 as needed. The RAM 33 has an area for temporarily storing the programs and data read out from the ROM 34 and HD 35 by the CPU 31, and a work area which is used by the CPU 31 to execute various processes. The interface unit 37 connects the control unit 12 to the client device 21 and to the printing system 1. The network unit 36 connects the control unit 12 to the network N and is designed to provide communication with workstations and with other devices reachable via the network N. The image processing unit 39 may be implemented as a software component running on an operation system of the control unit 12 or as a firmware program, for example embodied in a field-programmable gate array (FPGA) or an application-specific integrated circuit (ASIC). The image processing unit 39 has functions for reading, interpreting and rasterizing the print job data. Said print job data contains image data to be printed (i.e. fonts and graphics that describe the content of the document to be printed, described in a Page Description Language or a raster file format like TIFF or JPEG), image processing attributes and print settings.

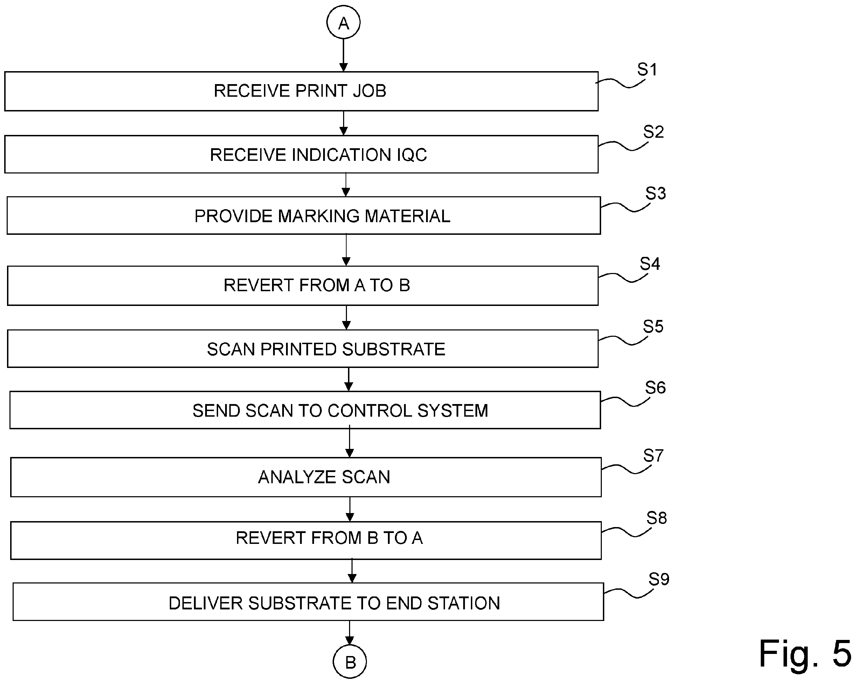

Fig. 5 describes an example of a first method according to the present invention.

For convenience reasons the drying step(s) and/or coating step has been left out of the description of the first method, but can easily be conceived based on Figs. 1a, 1b, 2 and 3 and their respective descriptions.

The corresponding method which comprises at least one drying step and/or the coating step are part of the scope of the present invention and claimed as such.

The first method starts in a starting point A which leads to a first step S1.

In the first step S1 the control system receives an instruction to print a print job for a media calibration of the substrate. The print job comprises print job data and print job settings.

In a second step S2 the control system receives an indication that the substrate is intended to be scanned by the in-line scanner for image quality control (IQC) after printed upon according to the print job.

The first step S1 and the second step S2 may be combined into one step.

In a third step S3 the at least one printhead provides the marking material to the substrate, when the transport system moves the substrate along the at least one printhead in the forward direction A.

In a fourth step S4 the control system instructs the motor system to revert the moving direction of the transport system from the forward direction A to a backward direction B opposite to the forward direction A.

In a fifth step S5 the in-line scanner scans the printed substrate in order to create at least one scanned image, when the printed substrate passes the in-line scanner in the backward direction B.

In a sixth step S6 the in-line scanner sending at least one scanned image to the control system.

In a seventh step S7 the control system analyzes the at least one scanned image for image quality control.

In an eighth step S8, after a completion of the scanning by the in-line scanner, the control system instructs the motor system to revert the moving direction of the transport system from the backward direction to the forward direction A.

In a ninth step S9 the transport system delivers the printed and scanned substrate at the end station.

The seventh step S7 may be executed after the eighth step S8 or the ninth step S9 or at a same time as the eighth step S8 or the ninth step S9.

The sixth step S6 and the seventh step S7 may be executed parallel to the eighth step S8 and the ninth step S9.

The method ends in an end point B.

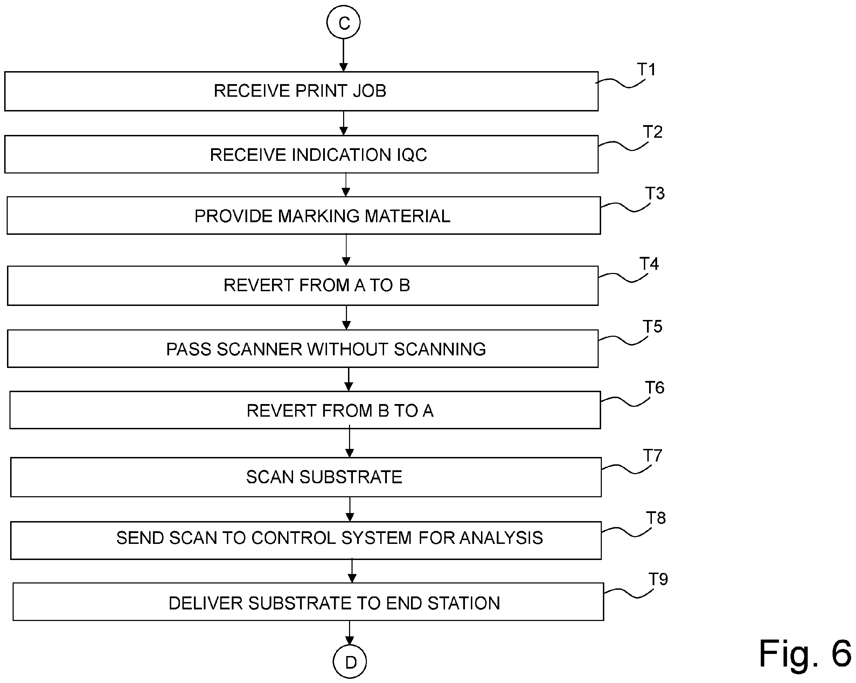

Fig. 6 describes an example of a second method according to the present invention.

For convenience reasons the drying step(s) and/or coating step has been left out of the description of the second method, but can easily be conceived based on Figs. 1a, 1b, 2 and 3 and their respective descriptions.

The corresponding method which comprises at least one drying step and/or the coating step are part of the scope of the present invention and claimed as such. The first method starts in a starting point C which leads to a first step T1.

In the first step T1 the control system receives an instruction to print a print job for a media calibration of the substrate. The print job comprises print job data and print job settings.

In a second step T2 the control system receives an indication that the substrate is intended to be scanned by the in-line scanner for image quality control (IQC) after printed upon according to the print job.

The first step T1 and the second step T2 may be combined into one step.

In a third step T3 the at least one printhead provides the marking material to the substrate, when the transport system moves the substrate along the at least one printhead in the forward direction A.

In a fourth step T4 the control system instructs the motor system to revert the moving direction of the transport system from the forward direction A to a backward direction B opposite to the forward direction A.

In a fifth step T5 the printed substrate passes the in-line scanner in the backward direction without being scanned by the in-line scanner.

In a sixth step T6 the control system instructs the motor system to revert the moving direction of the transport system from the backward direction B to the forward direction A after the printed substrate has completely passed the in-line scanner.

In a seventh step T7 the in-line scanner scans the printed substrate in order to create at least one scanned image, when the printed substrate passes the in-line scanner again in the forward direction A.

In an eighth step T8 the in-line scanner sends the at least one scanned image to the control system for analysis of the at least one scanned image.

In a ninth step T9 the transport system delivers the printed and scanned substrate at the end station.

The method ends in an end point D.

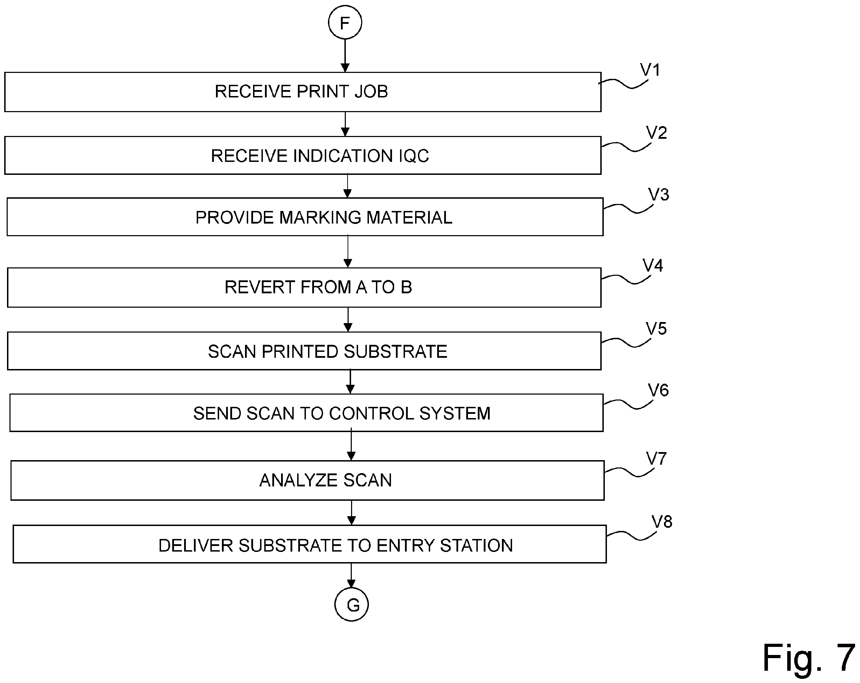

Fig. 7 describes an example of a third method according to the present invention.

For convenience reasons the drying step(s) and/or coating step has been left out of the description of the third method, but can easily be conceived based on Figs. 1a, 1b, 2 and 3 and their respective descriptions.

The corresponding method which comprises at least one drying step and/or the coating step are part of the scope of the present invention and claimed as such.

The first method starts in a starting point F which leads to a first step V1.

In the first step V1 the control system receives an instruction to print a print job for a media calibration of the substrate. The print job comprises print job data and print job settings.

In a second step V2 the control system receives an indication that the substrate is intended to be scanned by the in-line scanner for image quality control (IQC) after printed upon according to the print job.

The first step V1 and the second step V2 may be combined into one step.

In a third step V3 the at least one printhead provides the marking material to the substrate, when the transport system moves the substrate along the at least one printhead in the forward direction A.

In a fourth step V4 the control system instructs the motor system to revert the moving direction of the transport system from the forward direction A to a backward direction B opposite to the forward direction A.

In a fifth step V5 the in-line scanner scans the printed substrate in order to create at least one scanned image, when the printed substrate passes the in-line scanner in the backward direction B.

In a sixth step V6 the in-line scanner sending at least one scanned image to the control system.

In a seventh step V7 the control system analyzes the at least one scanned image for image quality control.

In an eighth step V8, after a completion of the scanning by the in-line scanner, the
the transport system delivers the printed and scanned substrate at the entry station.

The seventh step V7 may be executed after or at a same time as the eighth step V8.

Also the sixth step V6 and the seventh step V7 may be executed after or at the same time as the eighth step V8.

Also the eighth step V8 may be executed just before the seventh step V7 or even before the sixth step V6.

The method ends in an end point G.

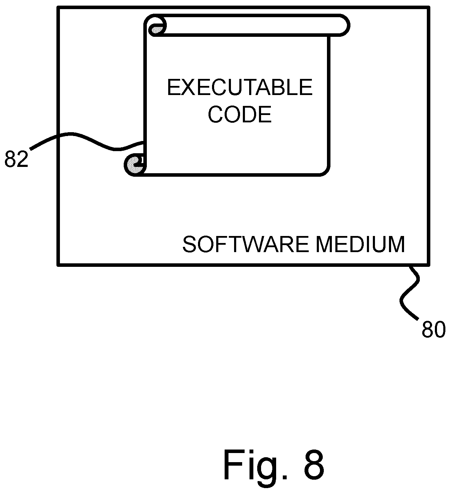

FIG. 8 schematically shows a non-transitory software medium 80 according to the invention. The software medium 80 comprises executable code 82 configured to, when executed, perform the method according to the invention, e.g. as described with respect to either the printing system 1a, 1b shown in FIG. 1 or the method of controlling the printing system 1a, 1b according to the present invention shown in Figs. 2, 3, 5, 6 and 7 and/or according to any of the variants and modifications of the printing system 1a, 1b and/or of the method described hereinbefore.

The non-transitory software medium 80 may, specifically, be formed as a CD or a CD-ROM, a DVD or a DVD-ROM, a BluRay disc or a BluRay-ROM disc, a magnetic hard drive, a solid state disk (SSD) hard drive, a USB memory device and so on.

Although specific embodiments of the invention are illustrated and described herein, it will be appreciated by those of ordinary skill in the art that a variety of alternate and/or equivalent implementations exist. It should be appreciated that the exemplary embodiment or exemplary embodiments are examples only and are not intended to limit the scope, applicability, or configuration in any way. Rather, the foregoing summary and detailed description will provide those skilled in the art with a convenient road map for implementing at least one exemplary embodiment, it being understood that various changes may be made in the function and arrangement of elements described in an exemplary embodiment without departing from the scope as set forth in the appended claims and their legal equivalents. Generally, this application is intended to cover any adaptations or variations of the specific embodiments discussed herein.

It will also be appreciated that in this document the terms "comprise", "comprising", "include", "including", "contain", "containing", "have", "having", and any variations thereof, are intended to be understood in an inclusive (i.e. non-exclusive) sense, such that the process, method, device, apparatus or system described herein is not limited to those features or parts or elements or steps recited but may include other elements, features, parts or steps not expressly listed or inherent to such process, method, article, or apparatus. Furthermore, the terms "a" and "an" used herein are intended to be understood as meaning one or more unless explicitly stated otherwise. Moreover, the terms "first", "second", "third", etc. are used merely as labels, and are not intended to impose numerical requirements on or to establish a certain ranking of importance of their objects.

The present invention being thus described, it will be obvious that the same may be varied in many ways. Such variations are not to be regarded as a departure from the spirit and scope of the present invention, and all such modifications as would be obvious to one skilled in the art are intended to be included within the scope of the following claims.

## Claims

1. A method for controlling an image quality of printed substrates by a printer (1, 1a, 1b), the printer (1, 1a, 1b) comprising an entry station for receiving a substrate to be printed, an end station for storing the substrate when printed, at least one print head for providing marking material to the substrate, an in-line scanner for detecting failing nozzles and positioned close to the at least one print head, a transport system for transporting the substrate in a forward direction (A) from the entry station along the at least one print head and the in-line scanner towards the end station, a motor system for driving the transport system, and a print controller (12) for receiving print jobs, for controlling the printing process and for receiving image data from the in-line scanner, wherein the method comprises the steps of
a) the control system (12) receiving an instruction to print a print job for a media calibration of the substrate, the print job comprising print job data and print job settings,
b) the control system (12) receiving an indication that the substrate is intended to be scanned by the in-line scanner for image quality control after printed upon according to the print job,
c) the at least one printhead providing the marking material to the substrate, when the transport system moves the substrate along the at least one printhead in the forward direction (A),
d) the control system (12) instructing the motor system to revert the moving direction of the transport system from the forward direction (A) to a backward direction (B) opposite to the forward direction (A),
e) the in-line scanner scanning the printed substrate in order to create at least one scanned image, when the printed substrate passes the in-line scanner in the backward direction (B),
f) the in-line scanner sending at least one scanned image to the control system (12),
g) the control system (12) analyzing the at least one scanned image for image quality control,
h) after a completion of the scanning by the in-line scanner, the control system (12) instructing the motor system to revert the moving direction of the transport system (12) from the backward direction (B) to the forward direction (A), and
i) the transport system delivering the printed and scanned substrate at the end station.

2. A method for controlling an image quality of printed substrates by a printer (1, 1a, 1b), the printer (1, 1a, 1b) comprising an entry station for receiving a substrate to be printed, an end station for storing the substrate when printed, at least one print head for providing marking material to the substrate, an in-line scanner for detecting failing nozzles and positioned close to the at least one print head, a transport system for transporting the substrate in a forward direction (A) from the entry station along the at least one print head and the in-line scanner towards the end station, a motor system for driving the transport system, and a print controller (12) for receiving print jobs, for controlling the printing process and for receiving image data from the in-line scanner, wherein the method comprises the steps of
a) the control system (12) receiving an instruction to print a print job for a media calibration of the substrate, the print job comprising print job data and print job settings,
b) the control system (12) receiving an indication that the substrate is intended to be scanned by the in-line scanner for image quality control after printed upon according to the print job,
c) the at least one printhead providing the marking material to the substrate, when the transport system moves the substrate along the at least one printhead in the forward direction (A),
d) the control system (12) instructing the motor system to revert the moving direction of the transport system from the forward direction (A) to a backward direction (B) opposite to the forward direction (A),
e) the printed substrate passing the in-line scanner in the backward direction (B) without being scanned by the in-line scanner,
f) the control system (12) instructing the motor system to revert the moving direction of the transport system from the backward direction (B) to the forward direction (A) after the printed substrate has completely passed the in-line scanner in the backward direction (B),
g) the in-line scanner scanning the printed substrate in order to create at least one scanned image, when the printed substrate passes the in-line scanner again in the forward direction (A),
h) the in-line scanner sending the at least one scanned image to the control system (12),
i) the control system (12) analyzing the at least one scanned image for image quality control, and
j) the transport system delivering the printed and scanned substrate at the end station.

3. A method according to claim 1 or 2, wherein the printer (1, 1a, 1b) comprises in-between the at least one print head and the end station, a first drying station for drying the printed substrate, and the method comprises a step of drying the printed substrate when the printed substrate passes the first drying station in the forward direction (A), and step d) is executed after drying the printed substrate.

4. A method according to claim 3, wherein the printer (1, 1a, 1b) comprises after the first drying station, a coater for coating the printed substrate and a second drying station for drying the coated substrate, and the method comprises the steps of coating the printed substrate when the printed substrate passes the coating station in the forward direction (A), and drying the coated substrate when the coated substrate passes the second drying station in the forward direction (A), and step d) is executed after drying the coated substrate.

5. A method according to any of the preceding claims, wherein the step b) of receiving the indication comprises the sub-step of receiving the indication by means of a user interface of the printer (1, 1a, 1b).

6. A method according to any one of claims 1 - 4, wherein the step b) of receiving the indication comprises the sub-step of extracting the indication from the print job settings.

7. A method according to any of the preceding claims, wherein the print job is predefined in memory of the control system (12).

8. A method according to claim 5, wherein the print job is received by means of the user interface of the printer (1, 1a, 1b).

9. A method according to any of the preceding claims, wherein the print job comprises at least one test pattern for image quality control.

10. A method for controlling an image quality of printed substrates by a printer (1, 1a, 1b), the printer (1, 1a, 1b) comprising an entry station for receiving a substrate to be printed, an end station for storing the substrate when printed, at least one print head for providing marking material to the substrate, an in-line scanner for detecting failing nozzles and positioned close to the at least one print head, a transport system for transporting the substrate in a forward direction (A) from the entry station along the at least one print head and the in-line scanner towards the end station, a motor system for driving the transport system, and a print controller (12) for receiving print jobs, for controlling the printing process and for receiving image data from the in-line scanner, wherein the method comprises the steps of
a) the control system (12) receiving an instruction to print a print job for a media calibration of the substrate, the print job comprising print job data and print job settings,
b) the control system (12) receiving an indication that the substrate, after printed upon according to the print job, is intended to be scanned by the in-line scanner for image quality control,
c) the at least one printhead providing the marking material to the substrate, when the transport system (12) moves the substrate along the at least one printhead in the forward direction (A),
d) the control system (12) instructing the motor system to revert the moving direction of the transport system from the forward direction (A) to a backward direction (B) opposite to the forward direction (A),
e) the in-line scanner scanning the printed substrate in order to create at least one scanned image, when the printed substrate passes the in-line scanner in the backward direction (B),
f) the in-line scanner sending at least one scanned image to the control system (12),
g) the control system (12) analyzing the at least one scanned image for image quality control, and
h) the transport system delivering the printed and scanned substrate at the entry station.

11. A printer (1, 1a, 1b) comprising an entry station for receiving a substrate to be printed, an end station for storing the substrate when printed, at least one print head for providing marking material to the substrate, an in-line scanner for detecting failing nozzles and positioned close to the at least one print head, a transport system for transporting the substrate in a forward direction (A) from the entry station along the at least one print head and the in-line-scanner towards the end station, a motor system for driving the transport system, a control system (12) for receiving print jobs, for controlling the printing process and for receiving image data from the in-line scanner, wherein the motor system is a bidirectional motor system and the printer (1, 1a, 1b) is configured to perform the steps of a method according to claim 1 or 2.

12. A printer (1, 1a, 1b) according to claim 11, wherein the printer (1, 1a, 1b) comprises in-between the at least one print head and the end station, a first drying station for drying the printed substrate, and the printer is configured to perform the steps of a method according to claim 3.

13. A printer (1, 1a, 1b) according to claim 12, wherein the printer (1, 1a, 1b) comprises after the first drying station, a coater for coating the printed substrate and a second drying station for drying the coated substrate, and the printer (1, 1a, 1b) is configured to perform the steps of a method according to claim 4.

14. A printer (1, 1a, 1b) according to claim 12 or 13, wherein the printer (1, 1a, 1b) comprises after the first drying station, an in-line finishing device for embellishment of the substrate.

15. A printer (1, 1a, 1b) according to any one of the claims 11 - 14, wherein the printer (1, 1a, 1b) comprises a user interface for receiving the indication and the printer (1, 1a, 1b) is configured to perform the steps of a method according to claim 5.

16. A software product comprising program code (52) on a machine-readable medium (50), which program code (52), when loaded into a control system of a printer, causes the printer to execute the steps of the method according to any of the claims 1 - 10.
